# EUROPEAN PATENT SPECIFICATION

(11) **EP 1 255 635 B1**
(45) Date of publication and mention of the grant of the patent: **21.09.2005**
(21) Application number: 01905528.4
(22) Date of filing: 12.02.2001
(51) Int. Cl.: B29C 47/52, B29C 47/36

(54) **ROTATING DISK EXTRUDER**
EXTRUDER MIT ROTIERENDEN SCHEIBEN
EXTRUDEUSE A DISQUE ROTATIF

(30) Priority: 17.02.2000 CA 2299209
(43) Date of publication of application: 13.11.2002
(73) Proprietor: Lupke, Manfred Arno Alfred, Ontario L3T 1W6 (CA); Lupke, Stefan A., Ontario L3T 1X6 (CA)
(72) Inventor: Lupke, Manfred Arno Alfred, Ontario L3T 1W6 (CA); Lupke, Stefan A., Ontario L3T 1X6 (CA)
(74) Representative: Otten, Hajo
(86) International application number: PCT/CA2001/000153
(87) International publication number: WO 2001/060585

(56) References cited:
- GB-A- 2 202 783
- US-A- 3 609 807
- US-A- 3 784 339
- PATENT ABSTRACTS OF JAPAN vol. 014, no. 206 (M-0967), 26 April 1990 (1990-04-26) & JP 02 043008 A (SHUNJI ONISHI), 13 February 1990 (1990-02-13)
- PATENT ABSTRACTS OF JAPAN vol. 015, no. 381 (M-1162), 26 September 1991 (1991-09-26) & JP 03 153311 A (MITSUBISHI HEAVY IND LTD), 1 July 1991 (1991-07-01)

## Description

### FIELD OF THE INVENTION

The present invention relates to an extruder used in a plastic extrusion process.

### BACKGROUND OF THE INVENTION

A conventional extruder used in a plastic extrusion process is one which comprises an elongated auger which operates in stages lengthwise of the extruder. These stages comprise an initial feeding of the plastic at the upstream end of the extruder, then a transition of the plastic from a solid to a more flowing state, and finally a metering of the plastic at the downstream end of the extruder. This type of extruder, while being very efficient in operation, takes up substantial floor space as a result of its extended length required in performing all of the above operation stages.

Another type of extruder taking up very little floor space, but which has been used to a very limited extent, is one which comprises a rotating disk. This type of extruder has not been overly successful due to excessive pressure build up on the disk which occurs as a result of all three of the above operation stages, i.e. feed, transition and metering occurring across the diameter of the disc.

### SUMMARY OF THE PRESENT INVENTION

The present invention provides an extruder which is used in a plastic extrusion process having the small space requirement benefits of the above mentioned disk type extruder but without suffering from the pressure related problems of known disk type extruders. More specifically, the extruder of the present invention, which is supplied with plastic material to make product from the plastic material comprises a plurality of extruder members each of which comprises a plate portion and a hollow tubular portion which is perpendicular or at least substantially perpendicular to the plate portion. The plate portions of the extruder members are located side by side with one another defining a first plastic handling part of the extruder and the tubular portions of the extruder members are telescopically interfitted with one another to define a second plastic handling part of the extruder.

In accordance with the present invention, feed and transition of plastic material introduced to the extruder is carried out in the first plastic handling part of the extruder and the metering of the plastic flow from the extruder is carried out in the second plastic handling part of the extruder. This separation of the metering from feeding stage of operation of the extruder eliminates the pressure related problems of known disk type extruders. At the same time, the extruder of the present invention does not require the large amount of floor space used by lengthy auger type extruders.

### BRIEF DESCRIPTION OF THE DRAWINGS

The above as well as other advantages and features of the present invention will be described in greater detail according to the preferred embodiments of the present invention in which;
Figure 1 is a perspective view looking down on a partially sectioned extruder according to a preferred embodiment of the present invention;
Figure 2 is a sectional view through the extruder of Figure 1;
Figure 3 is a further enlarged sectional view through the upper half of the extruder of Figure 1;
Figure 4 is a front view of the extruder of Figure 1 with part of the front support of the extruder removed to show operation of the extruder;
Figure 5 is a cross section of a slightly modified extruder according to a further preferred embodiment of the present invention.

### DETAILED DESCRIPTION ACCORDING TO THE PREFERRED EMBODIMENTS OF THE PRESENT INVENTION IN WHICH:

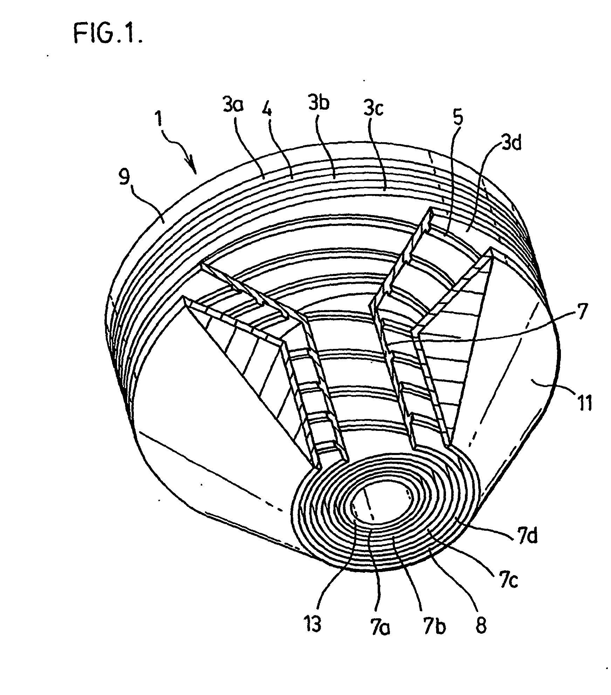

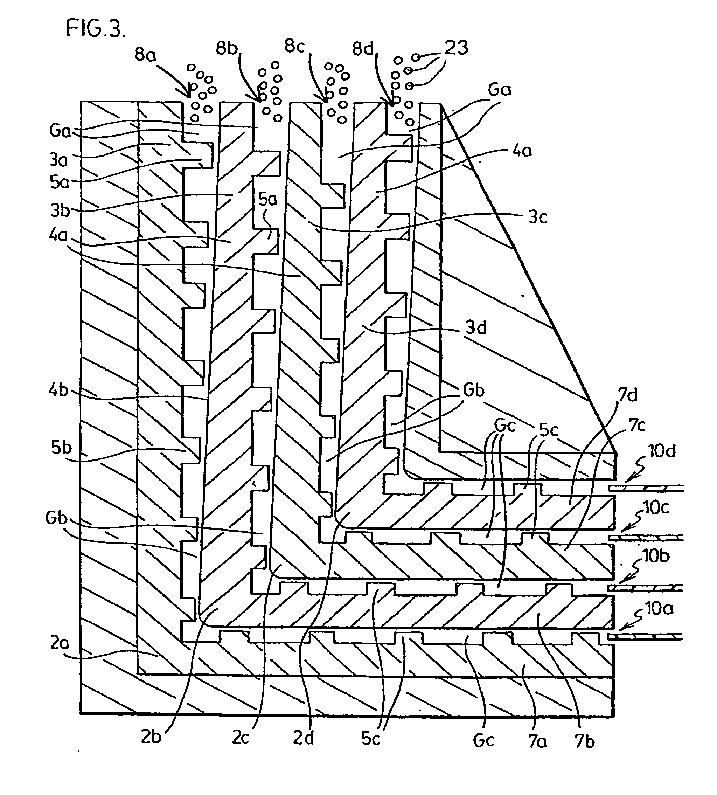

Figure 1 shows an extruder generally indicated at 1 which is used in an extrusion process to make plastic product. This extruder, as shown in Figure 3 of the drawings, is supplied with solid particles 23 of plastic material by means of a hopper 21 directing the material downwardly onto the extruder. As will be described below in detail, this material is broken down from its solid state to a flowing state and then output from the extruder to a molding region (not shown) where the product is given its shape.

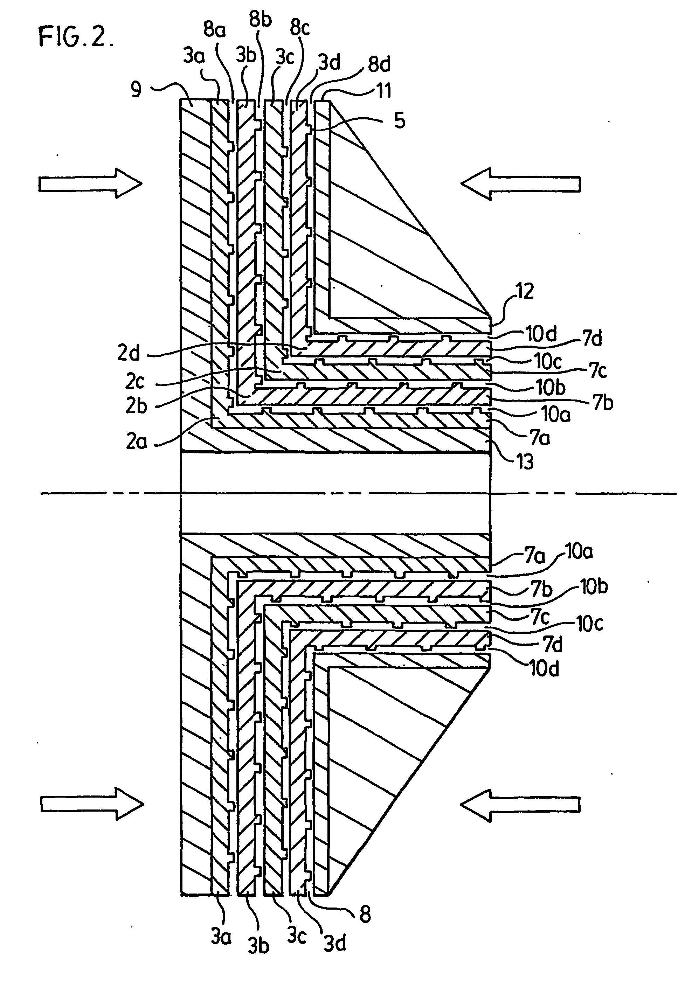

Referring more particularly to Figures 1 and 2 of the drawings, extruder 1 is formed by a plurality of extruder members 2a through 2d each of which comprises a plate portion and a hollow tubular portion perpendicular to, or at least substantially perpendicular to, the plate portion of the extruder member. For example, in Figure 2 it will be seen that extruder member 2a located to the rear of the extruder comprises plate portion 3a and hollow tubular portion 7a, extruder member 2b comprises plate portion 3b and hollow tubular portion 7b, extruder member 2c comprises plate portion 3c and hollow tubular portion 7c and extruder member 2d located to the front of the extruder comprises plate portion 3d and hollow tubular portion 7d. Plastic inlets 8a through 8d are provided between the extruder members. Also located between the extruder members are feed guides 5 which, as best seen in Figure 3 of the drawings, comprise a helical rib between each the extruder members.

The extruder operates in a manner such that there is relative rotation between adjacent extruder members. For example, in the Figure 2 set up, the rear extruder member 2a is fixed in position, the next extruder member 2b is rotatable, the next extruder member 2c is fixed and the forward extruder member 2d is rotatable. The extruder members are all held together by means of the extruder frame comprising a rear and a front frame portion, both of which have a shape similar to that of the extruder members. More specifically, the rear frame portion comprises a back plate 9 and an interior tubular portion 13. The front frame portion comprises a front frame part 11 and a hollow tubular frame portion 12.

The rear extruder member 2a is held against rotation by frame parts 9 and 13 respectively while the most forwardly extruder member 2d rotates relative to frame parts 11 and 12 respectively.

As can be clearly seen in Figure 2, the plate portions 3a through 3d fit side by side with one another to define a first plastic handling part of the extruder. The extruder portions 7a through 7d telescopically interfit with one another to define a second plastic handling part of the extruder. The purpose of these distinct plastic handling parts is described below.

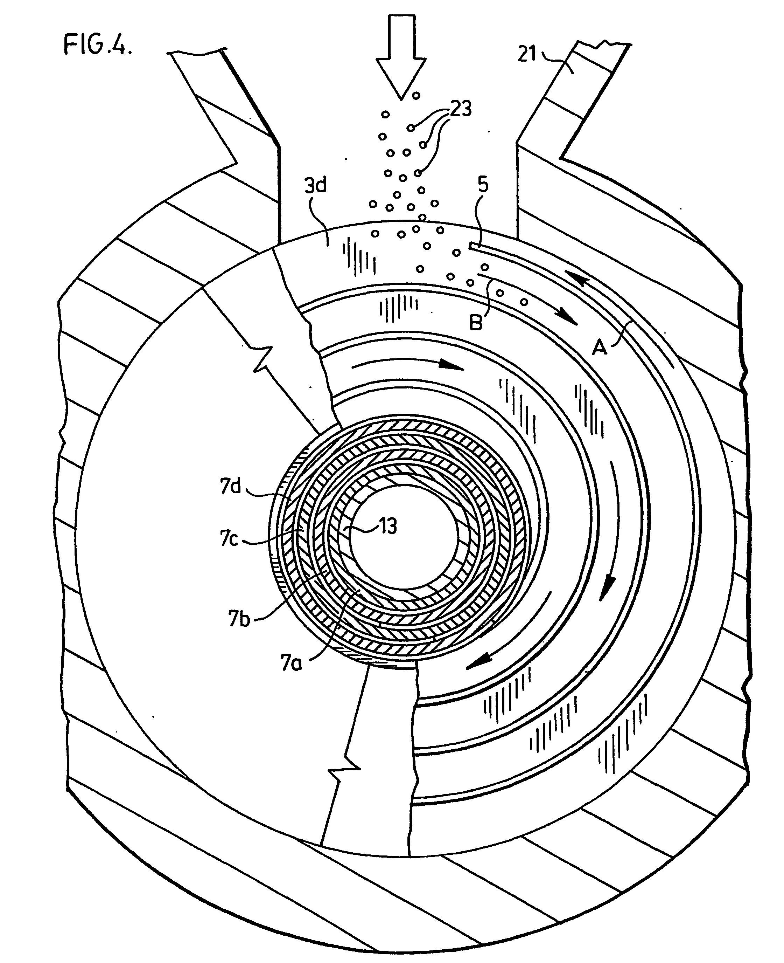

Referring now to Figure 4, it will be seen that the plastic particles 23 are dropped from the hopper 21 down onto the extruder. These plastic particles enter the extruder through inlets 8a through 8d between the plate portions 3a through 3d of the extruder members. The moving plates rotate in the direction of arrow A and the plastic particles are carried into the extruder in the direction of arrow B in a feeding stage which is the first stage of operation of the extruder. The extruder is set up for this feeding stage in a number of different ways as best seen in Figure 3.

Firstly, plate portions 3b through 3d are formed into plate parts 4a and 4b. The plate parts 4a occupying the outer reaches of the extruder members are thinner in profile than plate parts 4b towards the center of the extruder. In addition, the thread is formed into thread parts 5a and 5b in the first handling part of the extruder. Thread parts 5a, which are taller than thread parts 5b, are located in the same part of the extruder as the thinner plate parts 4a leaving relatively wide gaps Ga between the extruder members. The solid plastic particles are easily carried through these wide gaps by the tall thread parts towards the next stage of the extruder operation which occurs in the plastic transition region nearer the center of the extruder.

The transition region, i.e. the region where the plastic particles are converted to a more homogenous flowing condition is found where the shorter thread parts 5b face the wider plate parts 4b. In this region of the extruder the plastic is moved through the smaller gaps Gb where the extruder members are closer to one another to apply increased pressure on the plastic particles. This pressure accompanied by heating of the extruder members produces the change of state of the plastic.

The final stage of extruder operation is the metering stage which determines the flow rate of plastic from the extruder. This metering of plastic occurs between the tubular portions of the extruder members. There may also be some final transition of the plastic material occurring in this second part of the extruder.

In the metering region of the extruder the thread includes short thread parts 5c and the tubular portions are relatively close to one another leaving gaps Gc between the extruder members. These gaps are even narrower than gaps Gb. Furthermore, thread parts 5c are specifically contoured to produce a metering of the plastic so that controlled amounts of the plastic leave the extruder as plastic outputs 10a through 10d.

The plastic outputs from the extruder may be the same or they may be different from one another. In the case of the extruder shown in the drawings outputs 10a through 10d do different from one another. They are of varying thicknesses. They may also be variable in colour and even in material in which case the hopper is designed to provide individual feeds to each of the plastic inlets 8a through 8d.

The plastic outputs can be put to many different uses. They can be used separately from one another or they can be combined and put to a common use.

One of the key features of the present invention is that the metering of the plastic is carried out in a part of the extruder separate from the part of the extruder where the infeed of the plastic is carried out. This eliminates the problems of having to have separate operating pressures, required for the two different stages, in a single part of the extruder. This is a problem found in known disk extruders. Furthermore, in the first handling part of the extruder the pressures between the plate portions offset one another making it easy to stabilize each individual plate portion. More specifically, plate portion 3a is held in position by frame part 9 while each of the other plate portions experiences offsetting pressures on its front and back surfaces placing these plate portions in equilibrium or at least substantially in equilibrium with one another.

In the second part of the extruder where the metering pressure is required, each of the tubular portions is of a fixed diameter and therefore holds its own positioning relative to all of the other tubular portions.

All of the above features in both parts of the extruder make it very easy to stabilize the entire extruder for its different stages of operation

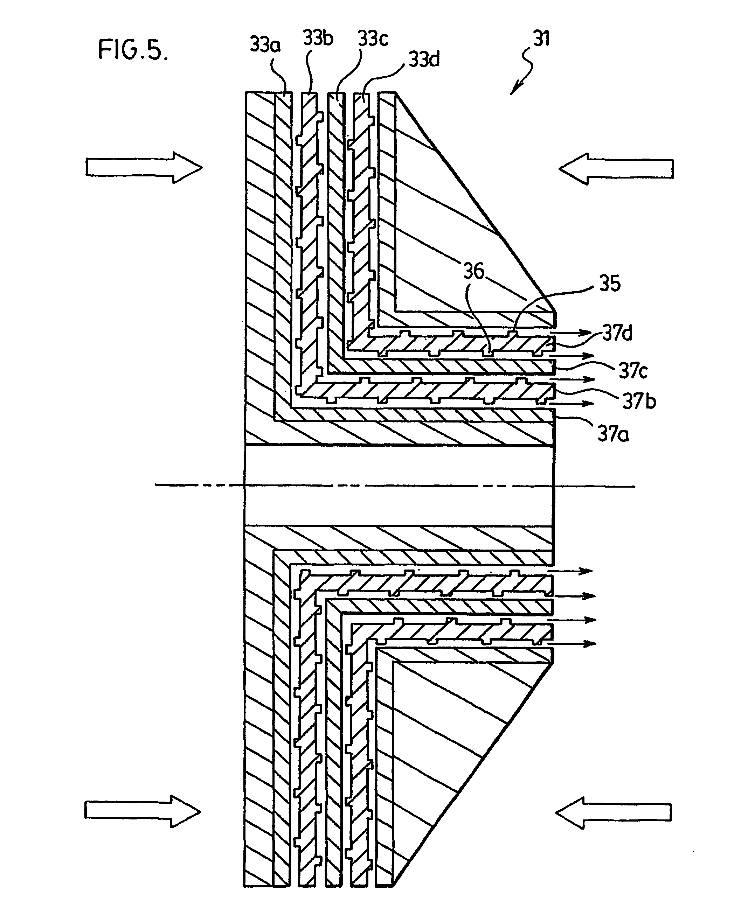

In the embodiment shown in Figure 2, the helical threads 5 are provided to the front faces of the alternating fixed and rotatable extruder members of extruder 1. There are however other set ups for the helical threads as evidenced for example by extruder 31 shown in Figure 5 of the drawings. This extruder comprises extruder members formed by plate portions 33a through 33d and hollow tubular portions 37a through 37d. In this embodiment, the helical threads are provided to opposite sides of plate portions 33b and 33d while plate portions 33a and 33c are free of threads. Likewise, the threads are provided to opposite sides of hollow tubular portions 37b and 37d while hollow tubular portions 37a and 37c are free of threads. Furthermore, the threads can either be provided on either a fixed or a rotating extruder member and the different stages of operation will still occur as long as there is relative rotation between adjacent extruder members. This relative rotation can be achieved by having one fixed and one rotating extruder member as described above or it can be further enhanced by having side by side extruder members which rotate in opposite directions.

Although various preferred embodiments of the present invention have been described in detail, it will be appreciated by those skilled in the art that variations may be made without departing from the spirit of the invention or the scope of the appended claims.

## Claims

1. An extruder (1) to which plastic material is supplied to make product from the plastic material, said extruder (1) comprising a plurality of extruder members (2a, 2b, 2c, 2d) which are operated to produce rotary interaction of adjacent once of said extruder members (2a, 2b, 2c, 2d), each extruder member (2a, 2b, 2c, 2d) comprising a plate portion (3a, 3b, 3c, 3d) at a first plastic handling part of the extruder (1) and a tubular portion (7a, 7b, 7c, 7d) at a second plastic handling part of the extruder (1), the plate portion (3a, 3b, 3c, 3d) being at least substantially perpendicular to the tubular portion (7a, 7b, 7c, 7d), and a helical thread (5) between the extruder members, **characterized in that** there is a gap (Ga) for an infeed of the plastic material at a plastic feed region between the plate portions (3a, 3b, 3c, 3d) in the first plastic handling part of the extruder (1), which is greater than a gap (Gc) for metering the plastic product through an output region between the tubular portions (7a, 7b, 7c, 7d) at the second plastic handling part of the extruder (1).

2. An extruder as claimed in Claim 1 **characterized by** a further gap (Gb) which is less than the gap (Ga) between the plate portions (3a, 3b, 3c, 3d) in the first plastic handling part of the extruder (1) and which is greater than the gap (Gc) between the tubular portions (7a, 7b, 7c, 7d) in the second plastic handling part of the extruder (1), the gap (Gb) being located in a plastic transition region between the infeed region and the output region of the extruder (1).

3. An extruder as claimed in Claim 1 or 2 **characterized in that** the plate portions (3a, 3b, 3c, 3d) each have a plate part (4a) at the plastic feed region and a plate part (4b) at the transition region of the extruder, the plate part (4a) being thinner than the plate part (4b).

4. An extruder as claimed in one of the Claims 1 to 3 **characterized in that** each plate part (4a) is provided with a thread part (5a) at the plastic feed region and each plate part (4b) is provided with a thread part (5b) at the transition region of the extruder, the thread part (5a) being taller than the thread part (5b).

5. An extruder as claimed in one of the Claims 1 to 4 **characterized in that** each plate part (4c) is provided with a thread part (5c) at the output region of the extruder (1), the thread part (5a) being taller than the thread part (5c).

## Patentansprüche

1. Extruder (1), dem Kunststoffmaterial zugeführt wird, um aus den Kunststoffmaterial ein Produkt herzustellen, wobei der Extruder (1) eine Vielzahl von Extruderteilen (2a, 2b, 2c, 2d) umfasst, die so betätigt werden, dass eine rotierende Wechselwirkung zwischen benachbarten von den Extruderteilen (2a, 2b, 2c, 2d) bewirkt wird, wobei jedes Extruderteil (2a, 2b, 2c, 2d) an einem ersten Kunststoff-Handlingbereich des Extruders (1) einen Plattenabschnitt (3a, 3b, 3c, 3d) und an einem zweiten Kunststoff-Handlingbereich des Extruders (1) einen Rohrabschnitt (7a, 7b, 7c, 7d) aufweist, wobei der Plattenabschnitt (3a, 3b, 3c, 3d) zumindest im Wesentlichen senkrecht zu dem Rohrabschnitt (7a, 7b, 7c, 7d) steht, wobei der Extruder ein Schraubengewinde (5) zwischen den Extruderteilen umfasst, **dadurch gekennzeichnet, dass** ein Spalt (Ga) zum Zuführen des Kunststoffmaterials an einem Kunststoff-Zufuhrbereich zwischen den Plattenabschnitten (3a, 3b, 3c, 3d) in dem ersten Kunststoff-Handlingbereich des Extruders (1) vorgesehen ist, der größer ist, als ein Spalt (Gc) zum Dosieren des Kunststoffproduktes durch einen Ausgabebereich zwischen den Rohrabschnitten (7a, 7b, 7c, 7d) an dem zweiten Kunststoff-Handlingbereich des Extruders (1).

2. Ein Extruder wie in Anspruch 1 beansprucht, **gekennzeichnet durch** einen weiteren Spalt (Gb) der kleiner ist als der Spalt (Ga) zwischen den Plattenabschnitten (3a, 3b, 3c, 3d) in dem ersten Kunststoff-Handlingbereich des Extruders (1), und der größer ist als der Spalt (Gc) zwischen den Rohrabschnitten (7a, 7b, 7c, 7d) in dem zweiten Kunststoff-Handlingbereich des Extruders (1), wobei der Spalt (Gb) in einem Kunststoff-Übergangsbereich zwischen dem Zufuhrbereich und dem Ausgabebereich des Extruders angeordnet ist.

3. Ein Extruder wie in Anspruch 1 oder 2 beansprucht, **dadurch gekennzeichnet, dass** die Plattenabschnitte (3a, 3b, 3c, 3d) jeweils ein Plattenteil (4a) an dem Kunststoff-Zufuhrbereich und ein Plattenteil (4b) an dem Übergangsbereich des Extruders aufweisen, wobei das Plattenteil (4a) dünner ist als das Plattenteil (4b).

4. Ein Extruder wie in einem der Ansprüche 1 bis 3 beansprucht, **dadurch gekennzeichnet, dass** jedes Plattenteil (4a) mit einem Schraubenteil (5a) an dem Kunststoff-Zufuhrbereich versehen ist, und dass jedes Plattenteil (4b) mit einem Schraubenteil (5b) an dem Übergangsbereich des Extruders versehen ist, wobei das Schraubenteil (5a) größer ist als das Schraubenteil (5b).

5. Ein Extruder wie in einem der Ansprüche 1 bis 4 beansprucht, **dadurch gekennzeichnet, dass** jedes Plattenteil (4c) mit einem Kunststoffteil (5c) an dem Ausgabebereich des Extruders (1) versehen ist, wobei das Schraubenteil (5a) größer ist als das Schraubenteil (5c).

## Revendications

1. Extrudeuse (1) dans laquelle on introduit de la matière plastique pour fabriquer un produit à partir de matière plastique, ladite extrudeuse (1) comprenant une pluralité d'éléments d'extrudeuse (2a, 2b, 2c, 2d) qui sont actionnés pour produire une interaction rotative de l'un desdits éléments d'extrudeuse (2a, 2b, 2c, 2d) adjacents, chaque élément d'extrudeuse (2a, 2b, 2c, 2d) comprenant une partie formant plaque (3a, 3b, 3c, 3d) au niveau d'une première partie de traitement de plastique de l'extrudeuse (1) et une partie tubulaire (7a, 7b, 7c, 7d) au niveau d'une seconde partie de traitement de plastique de l'extrudeuse (1), la partie formant plaque (3a, 3b, 3c, 3d) étant au moins sensiblement perpendiculaire à la partie tubulaire (7a, 7b, 7c, 7d) et un filetage hélicoïdal (5) entre les éléments d'extrudeuse, **caractérisée en ce qu'**il existe un espace (Ga) pour une entrée de la matière plastique au niveau d'une région d'alimentation de plastique entre les parties formant plaque (3a, 3b, 3c, 3d) dans la première partie de traitement de plastique de l'extrudeuse (1), qui est supérieur à un espace (Gc) pour doser le produit en plastique à travers une région de sortie située entre les parties tubulaires (7a, 7b, 7c, 7d) au niveau de la seconde partie de traitement de plastique de l'extrudeuse (1).

2. Extrudeuse selon la revendication 1, **caractérisée par** un autre espace (Gb) qui est inférieur à l'espace (Ga) situé entre les parties formant plaque (3a, 3b, 3c, 3d) dans la première partie de traitement de plastique de l'extrudeuse (1) et qui est supérieur à l'espace (Gc) entre les parties tubulaires (7a, 7b, 7c, 7d) dans la seconde partie de traitement de plastique de l'extrudeuse (1), l'espace (Gb) étant situé dans une région de transition de plastique entre la région d'entrée et la région de sortie de l'extrudeuse (1).

3. Extrudeuse selon la revendication 1 ou 2, **caractérisée en ce que** les parties formant plaque (3a, 3b, 3c, 3d) ont chacune une partie de plaque (4a) au niveau de la région d'alimentation de plastique et une partie de plaque (4b) au niveau de la région de transition de l'extrudeuse, la partie de plaque (4a) étant plus fine que la partie de plaque (4b).

4. Extrudeuse selon l'une quelconque des revendications 1 à 3, **caractérisée en ce que** chaque partie de plaque (4a) est prévue avec une partie de filetage (5a) au niveau de la région d'alimentation de plastique et chaque partie de plaque (4b) est prévue avec une partie de filetage (5b) au niveau de la région de transition de l'extrudeuse, la partie de filetage (5a) étant plus grande que la partie de filetage (5b).

5. Extrudeuse selon l'une des revendications 1 à 4, **caractérisée en ce que** chaque partie de plaque (4c) est prévue avec une partie de filetage (5c) au niveau de la région de sortie de l'extrudeuse (1), la partie de filetage (5a) étant plus grande que la partie de filetage (5c).
